**Europäisches Patentamt**

**European Patent Office**

**Office européen des brevets**

(19)

(11) Veröffentlichungsnummer : **0 347 605 B1**

(12) **EUROPÄISCHE PATENTSCHRIFT**

(45) Veröffentlichungstag der Patentschrift :
22.07.92 Patentblatt 92/30

(51) Int. Cl.⁵ : **B01D 1/14, B01D 5/00**

(21) Anmeldenummer : **89109310.6**

(22) Anmeldetag : **24.05.89**

(54) **Verfahren und Vorrichtung zum Trennen von Lösemitteln und Ölen.**

(30) Priorität : **21.06.88 DE 3820847**

(43) Veröffentlichungstag der Anmeldung :
**27.12.89 Patentblatt 89/52**

(45) Bekanntmachung des Hinweises auf die
Patenterteilung :
**22.07.92 Patentblatt 92/30**

(84) Benannte Vertragsstaaten :
**AT BE CH DE ES FR GB GR IT LI LU NL SE**

(56) Entgegenhaltungen :
**EP-A- 0 067 142
CH-A- 548 785
DE-A- 1 420 094
DE-A- 3 229 030
DE-C- 448 291
DE-C- 480 747
DE-C- 960 633**

(56) Entgegenhaltungen :
**CHEMISCHE TECHNIK Band 22, Nr. 6, Juni
1970, Seite 364, Berlin, DE; B. ATKINSON et
al.: "Eine Methode zur Wiedergewinnung von
Lösungsmitteln und gelösten Stoffen aus Lösungen" & British Chemical Engineering 1969,
Band 14, Seiten 1193-1196**

(73) Patentinhaber : **Flühs Drehtechnik GmbH.
Lösenbacher Landstrasse 2
W-5880 Lüdenscheid 6 (DE)**

(72) Erfinder : **vom Dahl, Uwe
Handweiserstrasse 12
W-5880 Lüdenscheid (DE)**
Erfinder : **Wolff, Heinz
Worthhagen 27
W-5880 Lüdenscheid (DE)**

(74) Vertreter : **Dörner, Lothar, Dipl.-Ing.
Stresemannstrasse 15
W-5800 Hagen 1 (DE)**

EP 0 347 605 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Technisches Gebiet:

Die Erfindung betrifft ein Verfahren zum Trennen von Lösemitteln und Ölen aus einer Öl-Lösemittel-Lösung, bei dem die Öl-Lösemittel-Lösung mit einem trockenen Gas bzw. Gasgemisch verwirbelt wird, sowie eine Vorrichtung zur Durchführung des Verfahrens.

In vielen Bereichen der Industrie ist es unvermeidbar, daß Lösemittel, z.B. chlorierte Kohlenwasserstoffe (-CKW) oder fluorierte Kohlenwasserstoffe (-FKW), in Bearbeitungsöle gelangen. Beispiel hierfür ist die Entfettung bzw. Reinigung öliger Metallteile in CKW- oder FKW-Waschanlagen.

Stand der Technik:

Aus der DE-A-3229030 sind ein Verfahren und eine Vorrichtung zur Nachbehandlung lösungsmittelhaltiger, flüssiger, brennbarer Rückstände von Maschinen bekannt, z.B. zum Entfernen von chemischen Lösungsmitteln aus flüssigen Rückständen, die ölhaltig sein können und aus Bearbeitungsmaschinen stammen. Die Lösung aus Rückständen und Lösungsmitteln wird in einen beheizten Behälter gefüllt. Aus der Umgebung angesaugte, erhitzte Luft wird im Bereich des Behälterbodens durch die Rückstände geleitet. Die erhitzte Luft nimmt dabei in den Rückständen enthaltenes Lösungsmittel auf. Die mit Lösungsmittel beladene Luft wird über einen Kondensator ins Freie geleitet. Das im Kondensator verflüssigte Lösungsmittel fließt in einen Sammelbehälter. Die nachbehandelten flüssigen Rückstände werden an der tiefsten Stelle des Bodens des Behälters abgezogen und einem Transportfaß zugeleitet,in dem sie zu einer Verbrennungsanlage transportiert werden. Abgesehen davon, daß bei dem bekannten Verfahren/der bekannten Vorrichtung die Verwirbelung von Gas und zu entsorgender Lösung verbesserungsbedürftig ist, werden die Rückstände der genannten Art nur so weit nachbehandelt, daß sie einer Verbrennung zugeführt werden können. Die nachbehandelten Rückstände sind aber nach den heutigen gesetzlichen Bestimmungen als Sondermüll zu betrachten; kostenspielige Entsorgung durch Verbrennung bleibt die Folge.

Aus der EP-A-0067142 sind ein Verfahren und eine Vorrichtung zum Trennen eines flüssigen Gemisches bekannt, das ein Lösemittel aufweist. Das Gemisch wird in einen Behälter gefüllt. Oberhalb des Gemisch-Spiegels münden Rohre, über die heiße Gase herangeführt werden. Es findet eine Verdunstung des Gemisches statt; das mit Lösemittel angereicherte Gas wird durch einen Nebelabscheider einem Kondensator zugeführt, wo das Lösemittel kondensiert und das Gas wieder dem Kreislauf zugeführt wird. Der als trocken bezeichnete Rückstand im Behälter wird über einen Ausgang entfernt. Auch hier ist die Vorrichtung verbesserungsbedürftig.

Darstellung der Erfindung:

Der Erfindung liegt die Aufgabe zugrunde, ein wirtschaftlich vertretbares Verfahren zu schaffen, mit dessen Hilfe eine Öl-Lösemittel-Lösung so zu trennen ist, daß das Öl praktisch lösemittelfrei ist. Gemäß der Erfindung wird diese Aufgabe dadurch gelöst, daß die Öl-Lösemittel-Lösung in einen Verdunstungskessel versprüht wird, quer zu dem Nebel der Öl-Lösemittel-Lösung das trockene Gas geführt wird, das mit Lösemittel angereicherte Gas abgeführt und durch starkes Abkühlen vom Lösemittel befreit wird, das durch das starke Abkühlen vom Lösemittel befreite Gas erwärmt und erneut mit der Öl-Lösemittel-Lösung verwirbelt wird, das ausgetaute Lösemittel entfernt und das lösemittelfreie Öl abgelassen wird.

Bei der Erfindung wird durch die Erzeugung eines Nebels der Öl-Lösemittel-Lösung und die quer zu dem Nebel erfolgende Führung des Gases die Verwirbelung der Öl-Lösemittel-Lösung mit Gas verbessert und die Verdunstung des Lösemittels um ein Vielfaches intensiviert. Die Öl-Lösemittel-Lösung liegt nämlich tröpfchenweise, also mit großer Oberfläche vor, wonach sich eine große Angriffsfläche für das Gas ergibt. Das mit Lösemittel angereicherte Gas wird durch starkes Abkühlen getrocknet. Als Gas werden - in Abhängigkeit vom Lösemittel - beispielsweise Luft, Kohlendioxid oder Stickstoff verwendet. Das entfernte Lösemittel ist einer weiteren Verwendung zuführbar; das Gas bleibt im geschlossenen Kreislauf und wird erneut verwendet. Das am Abschluß eines Verfahrens lösemittelfreie Öl wird abgelassen.

In Versuchen hat sich das Verfahren nach der Erfindung bei der Trennung von chlorierten Kohlenwasserstoffen in Bearbeitungsölen bewährt. Lösemittelanteile von kleiner 0,01 % wurden ohne weiteres erreicht.

Zwei Vorrichtungen zur Durchführung des Verfahrens nach der Erfindung werden bevorzugt: Die eine Vorrichtung ist dadurch gekennzeichnet, daß in einem Verdunstungskessel eine Pumpe angeordnet ist, auf deren Flügel die Öl-Lösemittel-Lösung aufsprühbar ist und von denen sie als Nebel abprüht, daß innerhalb der Pumpe eine Zuleitung für das trockene Gas in Querrichtung mündet, daß mit dem Verdunstungskessel eine Kühleinrichtung verbunden ist, der das mit Lösemittel angereicherte Gas zuführbar ist und die mit Leitungen für die Entfernung des ausgetauten Lösemittels sowie mit Leitungen für die Rückführung des getrockneten Gases in den Verdunstungskessel versehen ist. Die andere Vorrichtung ist dadurch gekennzeichnet, daß in dem Verdunstungskessel ein Prallblech angeordnet ist, auf das die Öl-Lösemittel-Lösung gelenkt, und von dem sie abgesprüht werden kann, daß unterhalb des Prallblechs eine Zuleitung für das trockene Gas in Querrichtung mündet, daß mit dem Verdunstungskessel eine Kühleinrichtung verbunden ist, der das mit Lösemittel angereicherte Gas zuführbar ist und die mit Leitungen für die Entfernung des ausgetauten Lösemittels sowie mit Leitungen für die Rückführung des getrockneten Gases in den Verdunstungskessel versehen ist.

In weiterer Ausgestaltung der Vorrichtung nach der Erfindung ist die Kühleinrichtung in einen Gas-Gas-Wärmetauscher zur Vorkühlung und einen nachgeordneten Kältemittel-Gas-Wärmetauscher zur Trocknung des mit Lösemittel angereicherten Gases geteilt. Die Aufteilung des Kühlvorgangs in eine Vorkühlung und eine Nachkühlung/Tröckung verbessert den Wirkungsgrad der Vorrichtung wesentlich.

In einer anderen Ausgestaltung der Vorrichtung nach der Erfindung ist der Kältemittel-Gas-Wärmetauscher mit einem Kondensatableiter für das ausgetaute Lösemittel und mit einer Verbindungleitung nach dem Gas-Gas-Wärmetauscher für die Erwärmung des getrockneten Gases verbunden, der seinerseits über eine weitere Leitung für die Abgabe des gewärmten trockenen Gases mit dem Verdunstungskessel verbunden ist. Diese Ausgestaltung gewährleistet einmal den eingangs beschriebenen Kreislauf für das Gas, zum anderen die Wiedergewinnung des Lösemittels. Zur zusätzlichen Erwärmung des trockenen Gases kann zwischen dem Gas-Gas-Wärmetauscher und dem Verdunstungskessel eine Heizvorrichtung angeordnet sein.

Der Wirkungsgrad der Vorrichtung nach der Erfindung wird weiter erhöht, wenn zwischen der Auslaßöffnung an dem Verdunstungskessel für das mit Lösemittel angereicherte Gas und der Kühleinrichtung ein Ventilator und/oder in der Zuleitung in Strömungsrichtung des Gases vor dem Verdunstungskessel ein drosselbares Ventil angeordnet ist. Hierdurch wird in dem Verdunstungskessel ein Unterdruck einstellbar, der die Verdunstung des Lösemittels begünstigt, in dem Gas-Gas-Wärmetauscher ein Überdruck, der die Trennung des Lösemittels von dem Gas begünstigt.

Kurze Beschreibung der Zeichnungen:

Zwei Ausführungsbeispiele für die Vorrichtung nach der Erfindung sind in der Zeichnung dargestellt und werden nachfolgend im einzelnen beschrieben. Die Figuren zeigen in schematischer Darstellung je eine Vorrichtung zum Trennen chlorierter Kohlenwasserstoffe von Bearbeitungsölen aus einer Lösung mit Hilfe von Luft.

Weg zur Ausführung der Erfindung:

Eine Öl-Lösemittel-Lösung, z. B. eine Lösung aus 70 % Öl und 30 % Trichloräthylen, wird aus einem Behälter 17 mittels einer Pumpe 14 über eine Leitung 15 geführt. In der Leitung 15 ist eine Heizvorrichtung 23 für die Öl-Lösemittel-Lösung angeordnet. Die Leitung 15 durchsetzt den Deckel eines Verdunstungskessels 2.

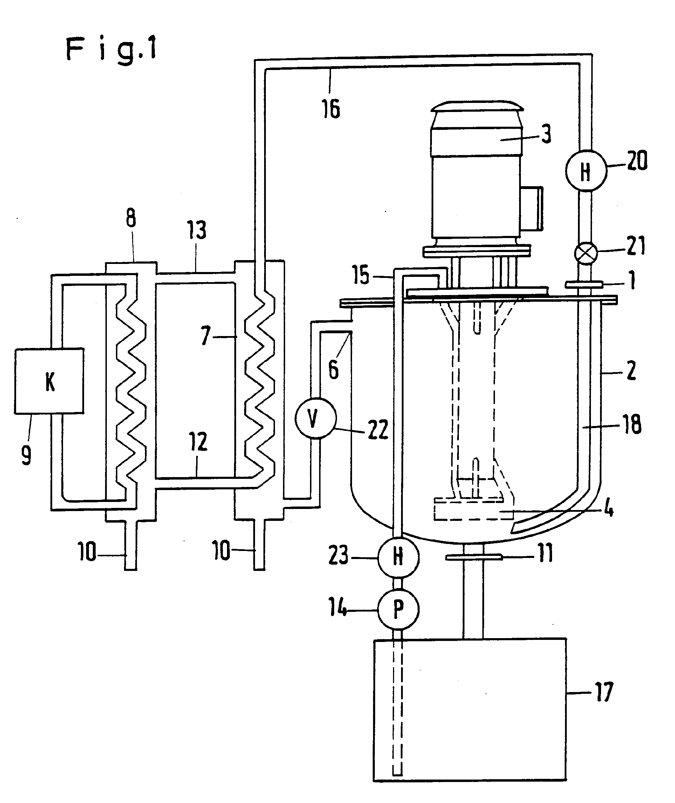

In Figur 1 ist in dem Verdunstungskessel 2 eine Pumpe 4 vorgesehen, die über einen Motor 3 angetrieben ist. Der Motor 3 ist an den Deckel des Verdunstungskessels 2 angeflanscht. Die Leitung 15 ist parallel zur Welle des Motors 3 geführt und mündet im Bereich der Pumpe 4. Die Öl-Lösemittel-Lösung wird auf die Flügel der Pumpe 4 gesprüht und von diesen als Nebel abgesprüht.

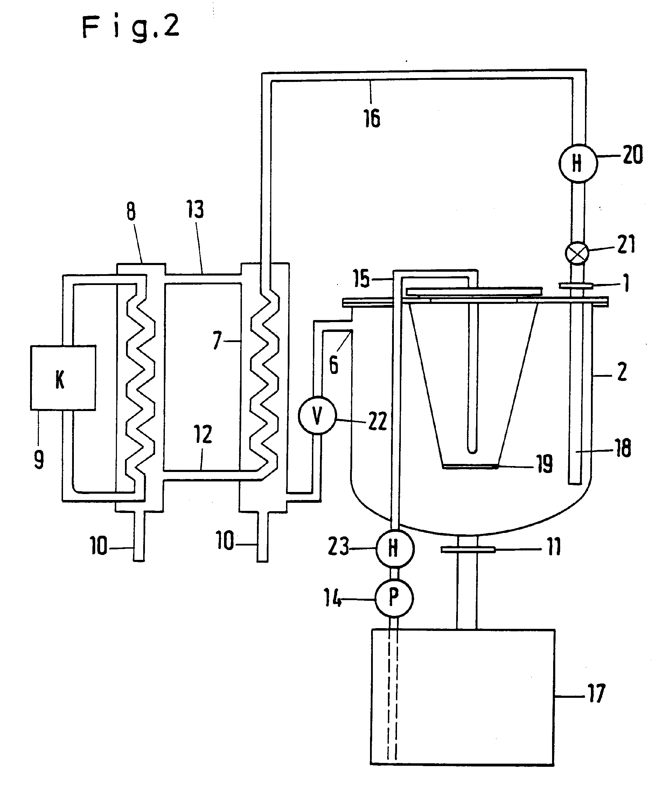

In Figur 2 ist anstelle der Pumpe 4 ein Prallblech 19 vorgesehen, auf das die Öl-Lösemittel-Lösung gesprüht und von dem es abgesprüht wird.

Mit einer Einlaßöffnung 1 in dem Deckel des Verdunstungskessels 2 ist einerseits eine Zuleitung 16 verbunden. Über die Zuleitung 16 gelangt trockenes Gas aus einem Gas-Gas-Wärmetauscher 7 in den Verdunstungskessel 2. In der Zuleitung 16 sind eine Heizvorrichtung 20 und ein drosselbares Ventil 21 angeordnet. Die Gasmenge im Kreislauf beträgt ca. 150 1. Die Zuleitung 16 ist hinter der Einlaßöffnung 1 in dem Verdunstungskessel 2 in eine Abgabeleitung 18 für das trockene Gas verlängert. Die Mündung der Abgabeleitung 18 liegt unterhalb der Flügel der Pumpe 4, bzw. unterhalb des Prallblechs 19. Die Mündung der Abgabeleitung liegt in Querrichtung in dem Verdunstungskessel 2. Das trockene Gas wird so mit der von der Pumpe 4 oder dem Prallblech 19 abgesprühten Öl-Lösemittel-Lösung vermischt.

Das mit Lösemittel angereicherte Gas verläßt über eine Auslaßöffnung 6 den Verdunstungskessel 2 und gelangt in eine Kühlvorrichtung. Die Auslaßöffnung 6 ist in der Wandung des Verdunstungskessels 2 unterhalb des Deckels angeordnet. Die Kühlvorrichtung weist einen Gas-Gas-Wärmetauscher 7 auf, in dem eine Vorkühlung erfolgt. Zwischen Auslaßöffnung 6 und Gas-Gas-Wärmetauscher 7 ist ein Ventilator 22 angeordnet. Dem Gas-Gas-Wärmetauscher 7 nachgeordnet ist ein Kältemittel-Gas-Wärmetauscher 8. Die niedrigste Temperatur im Kältemittel-Gas-Wärmetauscher ist -20° C.

Das in dem Gas-Gas-Wärmetauscher 7 vorgekühlte mit Lösemittel angereicherte Gas gelangt über eine Leitung 13 in den Kältemittel-Gas-Wärmetauscher 8. In diesem Wärmetauscher 8 erfolgt eine Trocknung durch starkes Abkühlen. Das Kältemittel ist in einer Kältemaschine 9, die in der Zeichnung als Schaltblock dargestellt ist, auf die gewünschte Temperatur gebracht. Das in dem Gas-Gas-Wärmetauscher 7 und das in dem Kältemitte-Gas-Wärmetauscher 8 ausgetaute Lösemittel wird über je einen Kondensatableiter 10 entfernt und kann erneut verwendet werden. Das getrocknete kalte Gas gelangt im Gegenstrom über eine Leitung 12 wieder in den Gas-Gas-Wärmetauscher 7, wo es erwärmt wird. Von dort aus wird es über die Leitung 16 wieder mit der Lösung in dem Verdunstungskessel 2 verwirbelt.

Im Boden des Verdunstungskessels 2 ist ein Auslaß 11 mit Verbindung zu dem Behälter 17 vorgesehen. Abhängig von der Anreicherung der Öl-Lösemittel-Lösung mit Lösemittel und dem Wirkungsgrad des Trennvorgangs in dem Verdunstungskessel 2 wird der Kreislauf abgebrochen, wenn in dem Behälter 17 nur noch lösungsmittelfreies Öl vorhanden ist.

## Patentansprüche

1. Verfahren zum Trennen von Lösemitteln und Ölen aus einer Öl-Lösemittel-Lösung, bei dem die Öl-Lösemittel- Lösung mit einem trockenen Gas bzw. Gasgemisch verwirbelt wird, dadurch gekennzeichnet, daß die Öl-Lösemittel-Lösung in einem Verdunstungskessel (2) verprüht wird, quer zu dem Nebel der Öl-Lösemittel-Lösung das trockene Gas geführt wird, das mit Lösemittel angereicherte Gas abgeführt und durch starkes Abkühlen vom Lösemittel befreit wird, das durch das starke Abkühlen vom Lösemittel befreite Gas erwärmt und erneut mit der Öl-Lösemittel-Lösung verwirbelt wird, das ausgetaute Lösemittel entfernt und das lösemittelfreie Öl abgelassen wird.

2. Vorrichtung zur Durchführung des Verfahrens nach Anspruch 1, dadurch gekennzeichnet, daß in dem Verdunstungskessel (2) eine Pumpe (4) angeordnet ist, auf deren Flügel die Öl-Lösemittel-Lösung autsprühbar ist und von denen sie als Nebel absprüht, daß innerhalb der Pumpe (4) eine Zuleitung (18) für das trockene Gas in Querrichtung mündet, daß mit dem Verdunstungskessel (2) eine Kühleinrichtung (7, 8) verbunden ist, der das mit Lösemittel angereicherte Gas zuführbar ist und die mit Leitungen (10) für die Entfernung des ausgetauten Lösemittels sowie mit Leitungen (16) für die Rückführung des getrockneten Gases in den Verdunstungskessel (2) versehen ist.

3. Vorrichtung zur Durchführung des Verfahrens nach Anspruch 1, dadurch gekennzeichnet, daß in dem Verdunstungskessel (2) ein Prallblech (19) angeordnet ist, auf das die Öl-Lösemittel-Lösung gelenkt und von dem sie abgesprüht werden kann, daß unterhalb des Prallblechs (19) eine Zuleitung (18) für das trockene Gas in Querrichtung mündet, daß mit dem Verdunstungskessel (2) eine Kühleinrichtung (7, 8) verbunden ist, der das mit Lösemittel angereicherte Gas zuführbar ist und die mit Leitungen (10) für die Entfernung des ausgetauten Lösemittels sowie mit Leitungen (16) für die Rückführung des getrockneten Gases in den Verdunstungskessel (2) versehen ist.

4. Vorrichtung nach Anspruch 2 oder 3, dadurch gekenn- . zeichnet, daß zwischen einer Auslaßöffnung (6) an dem Verdunstungskessel (2) für das mit Lösemittel angereicherte Gas und der Kühleinrichtung (7;8) ein Ventilator (22) angeordnet ist.

5. Vorrichtung nach einem der Ansprüche 2 bis 4, dadurch gekennzeichnet, daß die Kühleinrichtung (7;8) in einen Gas-Gas-Wärmetauscher (7) zur Vorkühlung und einen nachgeordneten Kältemittel-Gas-Wärmetauscher (8) zur Trocknung des mit Lösemittel angereicherten Gases geteilt ist.

6. Vorrichtung nach Anspruch 5, dadurch gekennzeichnet, daß der Kältemittel-Gas-Wärmetauscher (8) mit einem Kondensatableiter (10) für das ausgetaute Lösemittel und mit einer Verbindungsleitung (12) nach dem Gas-Gaswärmetauscher (7) für die Erwärmung des getrockneten Gases verbunden ist, der seinerseits über eine weitere Leitung (5) für die Abgabe des erwärmten trocknen Gases mit dem Verdunstungskessel verbunden ist.

7. Vorrichtung nach einem der Ansprüche 2 bis 6, dadurch gekennzeichnet, daß in der Zuleitung (16,18) in Strömungsrichtung des Gases vor dem Verdunstungskessel (2) eine Heizvorrichtung (20) angeordnet ist.

8. Vorrichtung nach einem der Ansprüche 2 bis 7, dadurch gekennzeichnet, daß in der Zuleitung (16,18) in Strömungsrichtung des Gases vor dem Verdunstungskessel (2) ein drosselbares Ventil (21) angeordnet ist.

## Claims

1. Process for separating solvents and oils from an oil-solvent solution, in which the oil-solvent solution is swirled with a dry gas or gas mixture, characterised in that the oil-solvent solution is sprayed into an evaporating boiler (2), the dry gas is passed transverse to the vapour of oil-solvent solution, the solvent-enriched gas is discharged and separated from the solvent by rapid cooling, the gas feed from solvent by rapid cooling is heated and swirled once more with the oil-solvent solution, the condensed solvent is removed and the solvent-free oil is drained off.

2. Apparatus for carrying out the process according to claim 1, characterised in that a pump (4), on whose fins the oil-solvent solution can be sprayed and from which fins the solution is sprayed as a vapour, is mounted in an evaporating boiler (2), in that a feed (18) for the dry gas opens into the pump (4) in the transverse direction, in that a cooling device (7, 8), to which the solvent-enriched gas can be fed and which is provided with pipes (10) for removing the condensed solvent and pipes (16) for recycling the dried gas to the evaporating boiler (2), is connected to the evaporating boiler (2).

3. Apparatus for carrying out the process according to claim 1, characterised in that a deflector (19), on to which the oil-solvent solution can be sprayed and from which the solution can be sprayed, is mounted in the evaporating boiler (2), in that a feed (18) for the dry gas opens below the deflector (19) in the transverse direction, in that a cooling device (7, 8), to which the solvent-enriched gas can be fed and which is provided with pipes (10) for removing the condensed solvent and pipes (16) for recycling the dried gas to the evaporating boiler (2), is connected to the evaporating boiler (2).

4. Apparatus according to claim 2 or 3, characterised in that a fan (22) is mounted between an outlet aperture (6) on the evaporating boiler (2) for the solvent-enriched gas and the cooling device (7; 8).

5. Apparatus according to one of claims 2 to 4, characterised in that the cooling device (7; 8) is divided into a gas-gas heat exchanger (7) for precooling and a coolant-gas heat exchanger (8) connected in series for drying the solvent-enriched gas.

6. Apparatus according to claim 5, characterised in that the coolant-gas heat exchanger (8) is provided with a condensate diverter (10) for the condensed solvent and with a connecting pipe (12) in series to the gas-gas heat exchanger (7) for heating the dried gas, which is in turn connected to the evaporating boiler via a further pipe (5) for delivering the heated dry gas.

7. Apparatus according to one of claims 2 to 6, characterised in that a heater (20) is mounted in the feed (16, 18) upstream of the evaporating boiler (2) in the direction of flow of the gas.

8. Apparatus according to one of claims 2 to 7, characterised in that a throttle-controllable valve (21) is mounted in the feed (16, 18) upstream of the evaporating boiler (2) in the direction of flow of the gas.

## Revendications

1. Procédé pour la séparation d'huiles et de solvants d'une solution, dans lequel la solution d'huile et de solvant est animée d'un mouvement tourbillonnaire avec un gaz sec et/ou un mélange de gaz, caractérisé en ce que la solution d'huile et de solvant est pulvérisée dans une cuve d'évaporation (2), en ce que le gaz sec est injecté à la transversale du brouillard de la solution, en ce que le gaz enrichi en solvant est évacué et débarassé du solvant par un refroidissement intensif, en ce que le gaz, débarassé du solvant par le refroidissement intensif, est réchauffé et animé d'un nouveau mouvement tourbillonnaire avec la solution d'huile et de solvant, en ce que le solvant, séparé par condensation, est éliminé, et en ce que l'huile sans solvant est évacuée.

2. Dispositif pour la réalisation du procédé suivant la revendication 1, caractérisé en ce qu'une pompe (4), sur les ailettes de laquelle peut être projetée la solution d'huile et de solvant, est disposée dans la cuve d'évaporation (2), la solution étant pulvérisée par les ailettes sous forme de brouillard, en ce qu'un conduit d'arrivée (18) pour le gaz sec débouche dans le sens transversal, à l'intérieur de la pompe (4), en ce qu'un dispositif de refroidissement (7,8), relié à la cuve d'évaporation (2), peut être alimenté en gaz, enrichi en solvant, et est muni de conduites (10) pour l'évacuation du solvant, séparé par condensation, ainsi que de conduites (16) pour le recyclage du gaz sec dans la cuve (2).

3. Dispositif pour la réalisation du procédé suivant la revendication 1, caractérisé en ce qu'une chicane (19) est disposée dans la cuve d'évaporation (2), la solution d'huile et de solvant pouvant être déviée et pulvérisée par cette chicane, en ce qu'un conduit d'arrivée (18) pour le gaz sec débouche dans le sens transversal, au-dessous de la chicane (19), en ce qu'un dispositif de refroidissement (7, 8), relié à la cuve d'évaporation (2), peut être alimenté en gaz, enrichi en solvant, et est muni de conduites (10) pour l'évacuation du solvant, séparé par condensation, ainsi que de conduites (16) pour le recyclage du gaz sec dans la cuve (2).

4. Dispositif suivant l'une des revendications 2 et 3, caractérisé en ce qu'un ventilateur (22) est disposé entre un orifice de décharge (6), prévu sur la cuve d'évaporation (2) pour le gaz enrichi en solvant, et le dispositif de refroidissement (7; 8).

5. Dispositif suivant l'une quelconque des revendications 2 à 4, caractérisé en ce que le dispositif de refroidissement (7; 8) est divisé en un échangeur gaz/gaz (7) pour le pré-refroidissement, et en un échangeur aval réfrigérant/gaz (8), pour le séchage du gaz enrichi en solvant.

6. Dispositif suivant la revendication 5, caractérisé en ce que l'échangeur réfrigérant/gaz (8) est relié à un purgeur (10) pour le solvant, séparé par condensation, et à une conduite de jonction (12), en direction de l'échangeur gaz/gaz (7), pour le réchauffage du gaz sec, l'échangeur précité étant lui-même relié par une autre conduite (16) à la cuve d'évaporation, pour céder le gaz sec réchauffé.

7. Dispositif suivant l'une quelconque des revendications 2 à 6, caractérisé en ce qu'un dispositif de chauffage (20) est disposé dans le conduit d'arrivée (16, 18), en amont de la cuve d'évaporation (2) dans le sens d'écoulement du gaz.

8. Dispositif suivant l'une quelconque des revendications 2 à 7, caractérisé en ce qu'une soupape d'étranglement (21) est disposée dans le conduit d'arrivée (16, 18), en amont de la cuve d'évaporation (2) dans le sens d'écoulement du gaz.

# F i g .1

EP 0 347 605 B1

Fig.2

8